(19) Europäisches Patentamt
European Patent Office
Office européen des brevets

(11) Publication number: **0 043 848**
**B1**

(12) # EUROPEAN PATENT SPECIFICATION

(45) Date of publication of patent specification: **27.09.89**

(51) Int. Cl.$^4$: **C 08 G 73/14**

(21) Application number: **81900537.2**

(22) Date of filing: **07.01.81**

(86) International application number:
**PCT/US81/00073**

(87) International publication number:
**WO 81/02014 23.07.81 Gazette 81/17**

(54) **Preparation of moulded objects from injection mouldable amide-imide copolymers.**

(30) Priority: **16.01.80 US 112653**

(43) Date of publication of application:
**20.01.82 Bulletin 82/03**

(45) Publication of the grant of the patent:
**27.09.89 Bulletin 89/39**

(84) Designated Contracting States:
**DE FR GB**

(56) References cited:
**GB-A- 570 858**
**US-A-2 421 024**
**US-A-3 654 227**
**US-A-3 661 863**
**US-A-3 817 942**
**US-A-3 842 026**
**US-A-3 862 092**
**US-A-4 066 631**

**The file contains technical information submitted after the application was filed and not included in this specification**

(73) Proprietor: **AMOCO CORPORATION**
**200 East Randolph Drive**
**Chicago Illinois 60601 (US)**

(72) Inventor: **KESKE, Robert G.**
**646 South Wehrli Drive**
**Naperville, IL 60540 (US)**
Inventor: **STEPHENS, James R.**
**7 South 361 Arbor Drive**
**Naperville, IL 60540 (US)**

(74) Representative: **Ritter, Stephen David et al**
**Mathys & Squire 10 Fleet Street**
**London EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 043 848 B1**

**Description**

## Background of the Invention

Field of the Invention

The field of the invention relates to the preparation of molded objects by injection molding random linear injection moldable amide-imide copolymers produced by reacting fully or partially acylated aromatic diamines with aromatic tricarboxylic acid anhydrides or mixtures of aromatic tricarboxylic acid anhydrides and aromatic dicarboxylic acids.

Background

Amide-imide and polyamide polymers and copolymers are a relatively new class or organic compounds known for their solubility in nitrogen containing solvents when in the polyamic acid form. The major application of these amide-imides has been as wire enamels and film formers. This is illustrated in U.S. Patents 3,852,106 (1974), 3,817,942 (1974), 3,661,832 (1972), 3,454,890 (1970) and 3,347,942 (1967). GB—A—570,858 (1945) discloses the general state of the art.

Polyimide and polyamide-imide polymers have also been found useful for molding applications as shown in U.S. Patents 4,016,140 (1977), 3,654,227 (1972) and 3,573,260 (1971).

U.S. Patents Nos. 3,817,942, 3,842,026 and 3,654,227 describe polyamide-imides and polyimides, but the products described in these patents are not random linear injection-moldable copolymers. Thus U.S. Patent No. 3,817,942 relates to the production of polymers containing only the structural unit

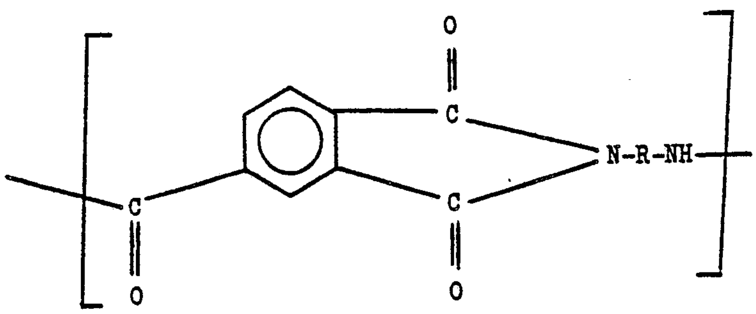

and these polymers are not injection moldable. Similarly U.S. Patent No. 3,842,026 concerns polyamide-imides which are only partially cured and have an "available weight loss" of 2 to 15% and are molded by sintering and fully curing polymer powder. U.S. Patent No. 3,654,227 relates to the production of generally insoluble and infusible polyimides by curing a low molecular weight prepolymer.

The general object of this invention is to provide a novel process for the manufacture of articles by injection molding amide-imide copolymers.

We have discovered that use of melt condensation process in which fully or partially acylated aromatic diamines are reacted with aromatic tricarboxylic anhydrides or mixtures of aromatic tricarboxylic acid anhydrides with aromatic dicarboxylic acids yields engineering plastics suitable for injection molding which feature very high tensile strength and heat distortion temperatures.

According to the present invention there is provided a process for the preparation of a molded object by injection molding which comprises injection molding a random linear injection moldable amide-imide copolymer produced by forming a reaction mixture from (A) the acylation product produced by reacting one mole of an aromatic diamine or diamine mixture with one to two moles of a $C_2$ to $C_8$ aliphatic monocarboxylic acid or a $C_4$ to $C_{16}$ aliphatic monocarboxylic anhydride and (B) at least one aromatic tricarboxylic acid anhydride, or a mixture of at least one aromatic dicarboxylic acid and at least one aromatic tricarboxylic acid anhydride in a molar ratio of 9:1 to 1:9 and subjecting said reaction mixture to poly-condensation conditions at a temperature of 65 to 399°C (150 to 750°F) wherein the molar ratio of diamine to anhydride or to acid and anhydride mixture is 0.9:1 to 1.1:1, and wherein the copolymer which is subjected to injection molding has an inherent viscosity (measured at 25°C and 0.5% w/v in N-methylpyrrolidone) of 0.6 to 3.0.

In the prior art, melt reaction of aromatic tricarboxylic acid anhydride compounds with aromatic diamines have produced products which are not suitable for injection molding application. The reason for this is not known, but it is specified that various side reactions occur. It has now been discovered that when certain fully or partially acylated aromatic diamines are reacted, injection molding grade polyamide-imide copolymers are produced. In our process we usually acylate more than half of the diamines utilized in the reaction. The preferred acylation is about 70 to 100 per cent of the total amine functionality.

Evidence for linearity of the copolymer to be used in the process of the invention is demonstrated by the solubility of the polymer. Polymers produced from aromatic tricarboxylic acid anhydride compounds such as trimellitic acid anhydride and aromatic diamines via various melt polymerization methods generally show little or no solubility for products having inherent viscosity in excess of 0.5. The copolymer produced according to the process described herein utilizing partially or fully acylated diamines is essentially soluble after curing with inherent viscosities in the range of 0.6 to 3.0. For the purpose of this invention, inherent viscosity is measured at 25°C and 0.5% w/v in N-methylpyrrolidone.

The injection moldable amorphous random linear polyamide-imide copolymers of this invention can comprise units of:

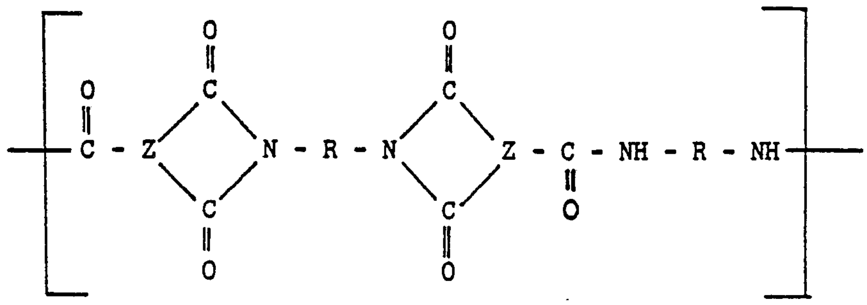

(A)

and units of

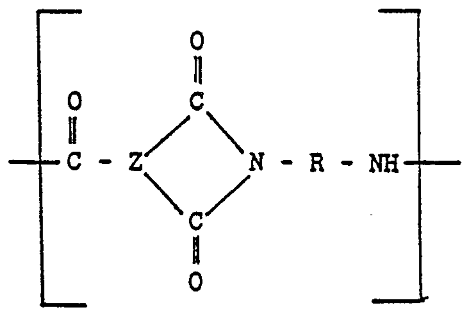

(B)

wherein the groups R are the same or different groups $R_1$ and $R_2$ which are divalent aromatic hydrocarbon radicals of from 6 to 20 carbon atoms or two divalent hydrocarbon radicals of from 6 to 20 carbon atoms joined directly or by stable likages selected from the group consisting of —O—, —SO—, methylene, —CO—, —$SO_2$—, and —S— radicals and wherein when R comprises a mixture of $R_1$ and $R_2$ the proportion of $R_1$-containing units to $R_2$-containing units is in the range from 10 mole percent $R_1$ containing units and 90 mole percent $R_2$ containing units to 90 mole percent $R_1$ containing units and 10 mole percent $R_2$ containing units.

The injection moldable random linear copolymer may also include 10% to 90% of Units (C) of the following formula:

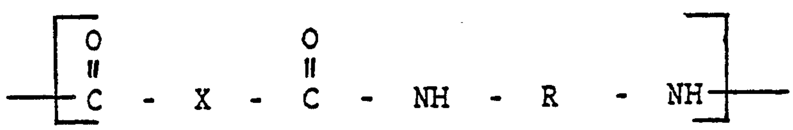

wherein X is a divalent aromatic radical, usually a divalent benzene radical. If structure (C) is present, R of structural Units (A) and (B) can be equal to $R_1$ or comprise both $R_1$ and $R_2$ as set forth above.

In the foregoing structural units Z is a trivalent aromatic radical. Z may be a trivalent radical of e.g. benzene, naphthalene, biphenyl, diphenyl ether, diphenyl sulfide, diphenyl sulfone, or ditolyl ether.

Useful aromatic tricarboxylic acid anhydrides which contribute the trivalent radical moiety of Z include those compound containing at least one pair of carboxylic groups in the ortho position which respect to each other or otherwise situated in a fashion which permits the formation of an anhydride structure, one other carboxyl group and from 9 to 21 carbon atoms. Within these limits, these compounds may contain one or more benzenoid rings such as, for instance, trimellitic anhydride and its isomers and multi-ring compounds such as the 1,8-anhydride of 1,3,8-tricarboxylnaphthalene. Usually these compounds contain up to three benzenoid rings.

The aromatic tricarboxylic acid anhydride used in the process to form the polyamide-imide polymers is of the formula:

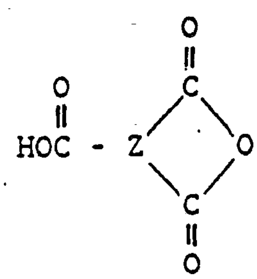

where Z is a trivalent aromatic radical defined as set forth herein above. The following aromatic tricarboxylic anhydrides are preferred: trimellitic acid anhydride; 2,3,6-naphthalene tricarboxylic anhydride; 1,5,6-naphthalene tricarboxylic anhydride, and the like; 2,6-dichloronaphthalene-4,5,7-tricarboxylic anhydride, and the like. One of the preferred aromatic tricarboxylic anhydrides is trimellitic anhydride since this compound is readily available and forms polymers having excellent physical properties of tensile strength and elongation and is resistant to high temperatures.

Suitable fully or partially acylated aromatic diamines useful in applicant's process include fully or partially acylated *para*- and *meta*-phenylenediamine, *para*- and *meta*-xylenediamine, *para*-toluenediamine, 2,4-toluenediamine, 2,6-toluenediamine, 3,5-toluenediamine, oxybis(aniline), thiobis(aniline), sulfonylbis(aniline), diaminobenzophenone, methylenebis(aniline), benzidine, 1,5-diaminonaphthalene, oxybis(2-methylaniline) and thiobis(2-methylaniline). Examples of other useful aromatic primary diamines are the following: 2,2'-naphthalene diamine, 2,4'-naphthalene diamine, 2,2'-biphenylene diamine, 3,3'-biphenylene diamine, and 4,4'-biphenylene diamine; 3,3'-dichlorobenzidine and ethylene dianiline (4,4'-diaminodiphenyl ethane); ketodianiline, 3,3'-diaminodiphenyl sulfide, 4,4'-diaminodiphenyl sulfone, 3,3'-diaminodiphenyl sulfone, hexafluoroisopropylidene-bis(4-phenyl amine), 4,4'-diaminodiphenyl methane, 2,6-diaminopyridine, bis-(4-aminophenyl)diethyl silane, bis(4-aminophenyl)ethyl phosphine oxide, bis(4-aminophenyl)-N-phenylamine, bis(4-aminophenyl)-N-methylamine, 3,3'-dimethyl-4,4'-diaminobiphenyl, para-bis(2-methyl-4-aminophenyl)benzene and 3,3'-diaminoadamantane.

Useful aromatic dicarboxylic acids include isophthalic acid and terephthalic acid. In applicant's process further preparation of injection moldable amide-imide copolymers can be conducted without utilizing a solvent or fluidizing agent though it is preferred to use agents such as N-methylpyrrolidone, dimethylacetamide, or acetic acid for the initial mixing of reactants. In general, since these polymers are linear, they may be easily cured in the melt using a twin screw extruder as the finishing reactor instead of a solid state polymerization. However, in some instances, it may be helpful to solid state polymerize the copolymers. The term "solid state polymerization" refers to chain extension of polymer molecules under conditions where the polymer particles contain their solid form and do not become a fluid mass.

The solid state polymerizing can be carried out below the melting point of the copolymer and can be conducted in several ways. However, all the techniques require heating the ground or pelletized copolymer below the copolymer melting point, generally 204—316°C (400 to 600°F) while either sparging with an inert gas such as nitrogen or operating under vacuum.

Injection molding of the novel copolymer is accomplished by injecting the copolymer into a mold preferably maintained at a temperature of 121—260°C (250—500°F). In this process of 0.1—2.0 minutes cycle is used with a barrel temperature of preferably 260—371°C (500°F to 700°F). The injection molding conditions are given in Table I.

TABLE I

| | |
|---|---|
| Mold Temperature | (250—500°F) 121—260°C |
| Injection Pressure 13.6—272 MPa | (2,000—40,000 psi) and held for 0.5—20 seconds |
| Back Pressure 0—2720 KPa | (0—400 psi) |
| Cycle Time | 6—120 seconds |
| Extruder: | |
| Nozzle Temperature | (500°F to 700°F) 260—371°C |
| Barrel Temperature | (500°F to 700°F) 260—371°C |
| Screw: 10—200 revolutions/minute | |

In applicant's process the acylated aromatic diamines are not isolated or purified prior to their further reaction with the tricarboxylic acid anhydride compound or mixture of the tricarboxylic acid anhydride with dicarboxylic acid or with a mixture of isophthalic and terephthalic acid. They are prepared by reacting one to two moles of acetic anhydride or acid or propionic anhydride or acid or any other $C_2$ through $C_8$ containing aliphatic monocarboxylic acid or $C_4$ through $C_{16}$ containing aliphatic monocarboxylic anhydride and one mole of the appropriate aromatic diamine or diamine mixture. It should be noted that formic anhydride or acids cannot be used to acylate the diamines in this process.

Suitable acylating agents include acetic anhydride, acid or propionic acid or anhydride, or any other aliphatic monocarboxylic acid or anhydride containing from 2 to 8 carbon atoms per acid, preferably 2 to 4 carbon atoms per acid or 4 to 16 carbon atoms per anhydride, preferably 4 to 8 carbon atoms.

The following polymer preparation and examples illustrate the preferred embodiments of this invention.

Polycondensation can suitably be conducted as a continuous process, which process comprises reacting the fully or partially acylated aromatic diamines as defined above wherein at least 50% of the amine functionality is acylated with aromatic tricarboxylic acid anhydrides, or mixtures of aromatic dicarboxylic acids and aromatic tricarboxylic acid anhydrides in a molar ratio of about 9:1 to 1:9 at a temperature of 65—399°C (150 to 750°F) and wherein the molar ratio of the diamines to the anhydride or acid and anhydride mixture is 0.9:1 to 1.1:1.

Suitably the molded polymers can also be filled from 20 to 60 weight percent with glass fibers, glass beads, mineral fillers or mixtures thereof. Advantageously the aforementioned molding composition may contain from 30 to 50 weight percent of glass fiber, glass beads, mineral fillers or mixtures thereof.

Polymer Preparation 1

Oxybisaniline (OBA) (280 g), metaphenylenediamine (MPDA) (64.8 g), and 500 ml of N-methylpyrrolidone (NMP) were charged into a 3 liter 3-necked flask equipped with a metal-blade, metal shaft stirrer, pressure equalizing addition funnel with nitrogen inlet, and a distillation take off. After flushing the flask with nitrogen and keeping a slow bleed, acetic anhydride (204 g) was added over 5 min. to this stirred mixture during which time the exothermic acylation raised, the temperature to 79—93°C (175—200°F). Trimellitic anhydride (384 g) was added quickly to this solution. After a short induction period, the TMA dissolved and reacted as evidenced by a further rise in solution temperature to 121°C (250°F). Finally 2 g of trisnonylphenylphosphite was added to the solution. The temperature of the bottom half of the spherical heating mantle surrounding the flask was set to 316°C (600°F), while a Variac connected to the top half was set to 50. After 80 min. of heating, 730 ml of solvent, water, and acetic acid had distilled, during which time an extremely viscous polymer was formed. The polymer was soluble in 60:40 w/w phenol:tetrachloroethane (TCE), NMP, and 100% sulfuric acid. Its inherent viscosity (0.5% w/v in 60:40 w/w phenol:TCE) was 0.23. The polymer was cured under high vacuum overnight at 270°C to give material with an inherent viscosity of 1.36 in 100% sulfuric acid or 0.80 in NMP (0.5% w/v at 25°C). The polymer could be easily compression molded (5 min. at 371°C [700°F]) to produce specimens with a tensile strength of 45 MPa (6,500 psi). Annealing these parts 16 hr. at 232°C (450°F) and 100 hr. at 260°C (500°F) produced specimens (without distortion) having a tensile strength of 96 MPa (14,000 psi).

Example 1

Fully aromatic TMA:oxybisaniline:metaphenylene diamine (MPDA) (in a molar ratio of 1:0.7:0.3) polyamideimide was prepared according to the procedure set forth in the above Polymer Preparation and the copolymer has an inherent viscosity of 0.35. The copolymer was then solid state polymerized raising the inherent viscosity to 0.80. The resulting copolymer was then injected on the Arburg injection molding equipment using mold temperatures of 210—227°C (410°F to 440°F) and barrel temperatures of 321—338°C (610°F to 640°F) Some of the molded specimens were then annealed for 48 hours at 243°C (470°F) followed by 96 hours at 260°C (500°F). The physical properties of these copolymers are listed in Table II. They had tensile strength of 176—180 MPa (25,600 to 26,100 p.s.i.), elongation of 9.5% and flexural strength of 225—245 MPa (32,600 to 35,600 p.s.i.). After annealing, the copolymer is still soluble up to 90% with very little change in inherent viscosity taking place.

TABLE II
Properties of Injection Molded fully Aromatic
Amide-Imide Polymer (OBA:MPDA 70:30)

| | ASTM Method | |
|---|---|---|
| Mold Temperature, | | 227°C (440°F) |
| Annealed | | No |
| Tensile Strength, (psi) MPa | D—638 | (16,800) 115 |
| Tensile Modulus, (psi) MPa | D—638 | (585,000) 4033 |
| Percent Elongation | D—638 | 3.8 |
| Flexural Strength, (psi) MPa | D—790 | (23,100) 159 |
| Flexural Modulus, (psi) MPA | D—790 | (682,000) 4702 |
| Tensile Impact, (ft-lb/in²) kJ/m² | D—1822 | (12.0) 25.3 |
| H.D.T. (@ 264 psi, °F) @ 1.8 MPa, °C | D—648 | 249°C (480°F) |

TABLE II (Cont.)

| | ASTM Method | | |
|---|---|---|---|
| Mold Temperature, | | 210°C (410°F) | 227°C (440°F) |
| Annealed | | Yes | Yes |
| Tensile Strength, MPa (psi) | D—638 | 178 (26,100) | 176 (25,600) |
| Tensile Modulus, MPa (psi) | D—638 | 3612 (524,000) | 3578 (519,000) |
| Percent Elongation | D—638 | 9.5 | 9.6 |
| Flexural Strength, MPa (psi) | D790 | 245 (35,600) | 225 (32,600) |
| Flexural Modulus, MPa (psi) | D—790 | 4902 (711,000) | 4440 (644,000) |
| Tensile Impact, kJ/m² (ft-lb/in²) | D—1822 | 185 (87.7) | 137 (64.6) |
| H.D.T. @ 1.8 MPa (264 psi) | D—648 | — | — |

Example 2

Copolymers were prepared as in Example 1, but polymers with different inherent viscosities were injected to mold a 21.6 cm (8½") long Type I tensile bar. The molding was done on a 283 (10 ounce) Stokes molding machine. These copolymers were easy to anneal and the properties before and after annealing are listed in Table III.

TABLE III

Mechanical Properties of the Injection Molded TMA:OBA:MPDA 10:7:3 Polymer from Type I Tensile Specimens

| | As Molded | Annealed[a] | ASTM Method |
|---|---|---|---|
| Tensile Strength, MPa (psi) | 68(9,900) | 163(23,700) | D-638 |
| Tensile Modulus, MPa (psi) | 4812(698,000) | 4557(661,000) | D-638 |
| Percent Elongation | 2.1 | 9.7 | D-638 |
| Flexural Modulus, MPa (psi) | 5308(770,000) | 4688(680,000) | D-790 |
| Izod, J/m (ft-lb/in) notch | 282(0.53) | 906(1.7) | D-256 |
| Shrinkage | | 2.5% | |

[a] 16 hr @ 249°C (480°F), 24 hr @ 254°C (490°F), 72 hr @ 260°C (500°F)

Example 3

Melt preparation of TMA:OBA:MPDA 10:6:4 copolymer

Oxybisaniline (480 g), metaphenylenediamine (172.8 g) and acetic acid (945 g) was charged into a five-liter three-necked flask equipped with a metal-blade, metal shaft stirrer, pressure equalizing addition funnel with nitrogen inlet, and a distillation takeoff. After flushing the flask with nitrogen and keeping a slow bleed, acetic anhydride (408 g) was added over two minutes. This was followed by the addition of 768 g of trimellitic anhydride over one minute. The temperature of the bottom half of the spherical heating mantle surrounding the flask was set 385°C (725°F) and the Variac connected to the top half was set at 50. After 86 minutes approximately 1400 ml of distillate was collected, the polymer was briefly held under low vacuum 67 KPa (20 in Hg) and then cooled under nitrogen. Its inherent viscosity (0.5% w/v in NMP @ 25°C) was 0.24. The polymer was cured under high vacuum 0.1 KPa (0.8 mm Hg) for 16 hr @ 270°C (535°F) increasing its inherent viscosity to 0.75. The physical properties are set forth in Table IV.

TABLE IV

Mechanical Properties of the Injection Molded TMA:OBA:MPDA 10:6:4 Polymer

| | As Molded | Annealed[a] | ASTM Method |
|---|---|---|---|
| Tensile Strength, MPa (psi) | 85(12,400) | 183(26,500) | D-638 |
| Percent Elongation | 3.7 | 12.1 | D-638 |
| Flexural Strength, MPa (psi) | 194(28,100) | 224(32,500) | D-790 |
| Flexural Modulus, MPa (psi) | 4647(674,000) | 4495(652,000) | D-790 |
| Izod, J/m (ft-lb/in) notch | 800(1.5) | 1866(3.5) | D-256 |
| H.D.T. @ 1.8 MPa (264 psi) °C(°F) | 267(513) | 278(532) | D-648 |
| Shrinkage, [b]% | | 0.7% | |

[a] 16 hr @ 257°C (495°F), 24 hr @ 263°C (505°F), 24 hr @ 270°C (519°F)

[b] In length of D1708 tensile bar during annealing.

Samples of this copolymer were annealed under different conditions to determine the effect of annealing upon physical properties and dimensional stability of the test specimens. Results of the mechanical property tests are listed in Table V. Annealing cycles are also set forth in Table V.

TABLE V

Effect of Annealing Cycle on Properties of the Injection Molded TMA:OBA:MPDA 10:6:4 Polymer

| | ASTM Method | As Molded | |
|---|---|---|---|
| Annealing Cycle | | | I |
| Tensile Strength, MPa (psi) | D-638 | 85(12,400) | 185(26,500) |
| Percent Elongation | D-638 | 3.7 | 12.1 |
| Flexural Strength, MPa (psi) | D-790 | 194(28,100) | 224(32,500) |
| Flexural Modulus, MPa (psi) | D-790 | 4647(674,000) | 4495(652,000) |
| Izod, J/m (ft-lb/in) notch | D-256 | 800(1.5) | 866(3.5) |
| H.D.T. @ 1.8 MPa (264 psi) °C(°F) | D-648 | 267(513) | 278(532) |
| Shrinkage, [a]% | | - | 0.7 |
| Annealing Cycle | | II | III |
| Tensile Strength, MPa (psi) | D-638 | 182(26,400) | 180(26,100) |
| Percent Elongation | D-638 | 15 | 12.0 |
| Flexural Strength, MPa (psi) | D-790 | 270(31,900) | - |
| Flexural Modulus, MPa (psi) | D-790 | 4267(619,000) | - |
| Izod, J/m (ft-lb/in) notch | D-256 | 2238(4.2) | - |
| H.D.T. @ 1.8 MPa (264 psi) °C(°F) | D-648 | 277(530) | - |
| Shrinkage, [a]% | | 0.6 | 0.9 |

I 16 hr at 257°C (495°F), 24 at 263°C (505°F), 24 at 271°C (519°F)

II 30 hr at 257°C (495°F), 15 at 264°C (508°F), 20 at 268°C (515°F) 24 at 271°C (520°F)

III 24 hr at 265°C (509°F), 24 at 271°C (520°F)

[a] Of the D1708 T-bar.

Example 4

A copolymer was prepared similar to the procedure set forth in Example 3, but having the molar ratio of TMA:OBA:MPDA of 10:4:6.

Samples of this copolymer were injection molded and then annealed under different conditions to determine the effect of annealing upon physical properties and dimensional stability of the test specimens. Results of the mechanical property tests are listed in Table VI. Annealing cycles are also set forth in Table VI.

TABLE VI

Effect of Annealing Cycle on the Properties of the Injection Molded 10:4:6 TMA:OBA:MPDA Polymer

| | ASTM Method | As Molded | I |
|---|---|---|---|
| Annealing Cycle | | | I |
| Tensile Strength, MPa (psi) | D-638 | 134(19,400) | 177(25,700) |
| Percent Elongation | D-638 | 6.9 | 15 |
| Flexural Strength, MPa (psi) | D-790 | 224(32,500) | 221(32,100) |
| Flexural Modulus, MPa (psi) | D-790 | 4502(653,000) | 4136(600,000) |
| Izod, J/m (ft-lb/in) notch | D-256 | 1119(2.1) | 1119(2.1) |
| H.D.T. @ 1.8 MPa (264 psi) °C(°F) | D-648 | 270(519) | 286(547) |
| Shrinkage, [a]% | | | 0.4 |

TABLE VI (Cont.)

| | ASTM Method | | |
|---|---|---|---|
| Annealing Cycle | | II | III |
| Tensile Strength, MPa (psi) | D-638 | 1772(25,700) | 166(24,100) |
| Percent Elongation | D-638 | 15 | 9.8 |
| Flexural Strength, MPa (psi) | D-790 | 226(32,800) | - |
| Flexural Modulus, MPa (psi) | D-790 | 4660(676,000) | - |
| Izod, J/m (ft-lb/in) notch | D-256 | 1652(3.1) | - |
| H.D.T. @ 1.8 MPa (264 psi) °C(°F) | D-648 | 550 | - |
| Shrinkage, [a]% | | 0.47 | 0.7 |

I 30 hr at 257°C (495°F), 15 at 264°C (508°F) 20 at 268°C (515°F), 24 at 271°C (520°F)

II 24 hr at 265°C (509°F), 24 at 271°C (520°F)

III 24 hr at 271°C (520°F)

[a] Of the D1708 T-bar

Example 5

Preparation of TMA:OBA:MPDA: 10:6:4
Copolymer Prepared From 90% Acylated Diamines

A copolymer was prepared similar to the procedure set forth in Example 3 except that 1.8 moles of acetic anhydride per mole of diamine were used such that the diamines would be 90% acylated.

The copolymer has an inherent viscosity of 0.7. The sample was injection molded and annealed. Its mechanical properties are listed in Table VII.

TABLE VII

Mechanical Properties of 10:6:4 Trimellitic Anhydride:Oxybisaniline:Metaphenylenediamine Polymer Prepared from 90% Acylated Diamines

| | ASTM Method | Unannealed | Annealed[a] |
|---|---|---|---|
| Tensile Strength, MPa (psi) | D-638 | 90(13,100) | 173(25,100) |
| Percent Elongation | D-638 | 3.5 | 11.5 |
| Flexural Strength, MPa (psi) | D-790 | 165(23,900) | 218(31,600) |
| Flexural Modulus, MPa (psi) | D-790 | 4895(710,000) | 4640(673,000) |
| Izod, J/m (ft-lb/in) notch | D-256 | 1.4 | 3.7 |
| Heat Distortion Temperature @ 1.8 MPa (264 psi)°C(°F) | D-648 | 242(467) | 271(519) |

[a] Annealing cycle: 16 hr @ 254°C (490°F), 24 hr @ 262°C (504°F), 24 hr @ 260°C (510°F), 24 hr @ 271°C (520°F).

Polymer Preparation 2

This illustrates the continuous melt preparation of 10:6:4 TMA:OB:MPDA copolymer using 90% acylated diamines.

A twenty-five gallon stirred kettle was charged with 18,000 g (90 mole) of oxybisaniline, 6480 g (60 mole) of metaphenylenediamine, and 12 l (12,600 g) of acetic acid. To this stirred mixture under nitrogen was added 27,560 g (270 mole) of acetic anhydride over a period of 12 minutes while the skin of the jacketed kettle was water cooled. During the addition, the temperature of the kettle contents increased from 33°C (91°F) to 121°C (250°F). Trimellitic anhydride, 28,800 g (150 mole) was added to the kettle over a period of 5 minutes during which time the temperature of the contents dropped to 88°C (190°F). This mixture was heated to 116°C (240°F) by passing steam through the kettle's jacket. This mixture was continuously metered at a rate of 13,200 g/hr into an electrically heated (skin temperature 338°C [640°F]) helical anchor stirred reactor. The feed stream into this reactor was maintained at approximately 1033 kPa (150 psi) and the steam was heated to a temperature of 216—229°C (420—440°F). The reactor content was maintained at 2,5000—3,000 g and a melt temperature 302—316°C (575—600°F). Distillate was collected at a rate of 6,300—6,400 g/hr and product was pumped out of the reactor by a gear pump at a rate of 6,750—6,850 g/hr into a water bath. The product polymer had an inherent viscosity of 0.29 in N-methylpyrrolidone at 25°C and 0.5% w/v concentration.

This polymer was passed through an 8.2 ft. (2,5 m) long Egan twin screw reactor having 3.5 in (9 cm) diameter screws, operating at 26 RPM and a throughput of 30—32 kg/hr (66—70 lb/hr). The four zone temperature was set at 288, 332, 354 and 338°C (550, 630, 670, and 640°F) and melt temperature indicators in these zones showed temperatures in the range of 316—330, 356—365, 359—369 and 368—384°C (600—626, 672—689, 679—686, and 695—724°F). The extruder barrel was vented and vacuum was applied. The inherent viscosity of the polymer increased to 0.66 to 0.80 during this operation.

**Claims**

1. A process for the preparation of a molded object by injection molding which comprises injection molding a random linear injection moldable amide-imide copolymer produced by forming a reaction mixture from (A) the acylation product produced by reacting one mole of an aromatic diamine or diamine mixture with one to two moles of a $C_2$ to $C_8$ aliphatic monocarboxylic acid or a $C_4$ to $C_{16}$ aliphatic monocarboxylic anhydride and (B) at least one aromatic tricarboxylic acid anhydride, or a mixture of at least one aromatic dicarboxylic acid and at least one aromatic tricarboxylic acid anhydride in a molar ratio of 9:1 to 1:9 and subjecting said reaction mixture to poly-condensation conditions at a temperature of 65 to 399°C (150 to 750°F) wherein the molar ratio of diamine to anhydride or to acid and anhydride mixture is 0.9:1 to 1.1:1, and wherein the copolymer which is subjected to injection molding has an inherent viscosity (measured at 25°C and 0.5% w/v in N-methylpyrrolidone) of 0.6 to 3.0.

2. A process according to Claim 1, wherein the aromatic dicarboxylic acid is isophthalic acid.

3. A process according to Claim 1 or Claim 2, wherein the tricarboxylic acid anhydride is trimellitic anhydride.

4. A process according to any preceding claim, wherein 70 to 100 per cent of the total amine functionality has been acylated.

5. A process according to any preceding claim, wherein the acylated diamines are prepared from aromatic diamines containing one benzene ring or two benzene rings joined directly or by stable linkages consisting of —S—, —O—,

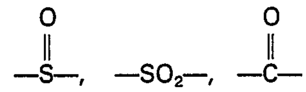

or methylene radicals

6. A process according to Claim 5, wherein the acylated diamines are prepared from oxybisaniline and metaphenylene diamine.

7. A process according to Claim 6, wherein the molar ratio of the oxybisaniline to the metaphenylene diamine is in the range of 8:2 to 2:8.

8. A process according to any preceding claim wherein said copolymer has been produced in a continuous process.

9. A process according to Claim 1 wherein the injection moldable random linear polyamide-imide copolymer comprises units of:

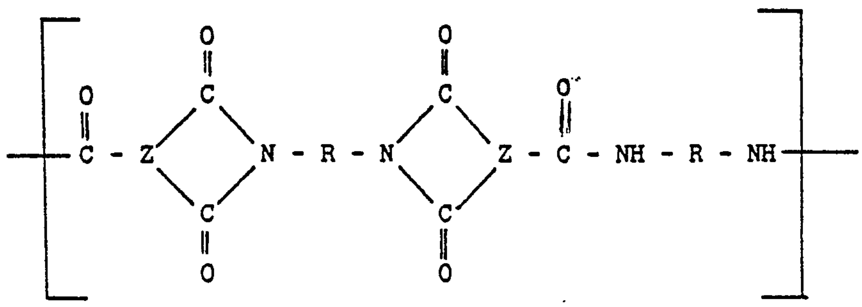

units of

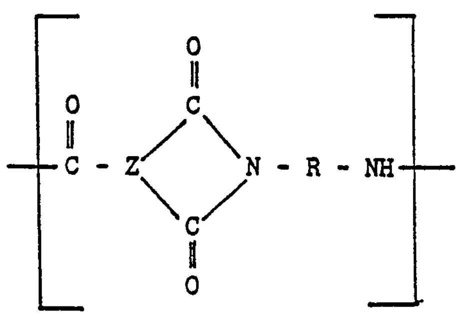

and optionally units of $-[CO-X-CO-NH-R-NH]-$

wherein "Z" is a trivalent aromatic radical; the groups R are the same or different groups $R_1$ and $R_2$ which are divalent aromatic hydrocarbon radicals of from 6 to 20 carbon atoms or two divalent hydrocarbon radicals of from 6 to 20 carbon atoms joined directly or by stable linkages selected from the group consisting of —O—, methylene, —CO—, —$SO_2$—, and —S-radicals and X is a divalent aromatic radical.

10. A process according to Claim 9 wherein when R comprises a mixture of $R_1$ and $R_2$ the proportion of $R_1$-containing units to $R_2$-containing units is in the range of 10 mole percent $R_1$-containing units and 90 mole perecent $R_2$-containing units to 90 mole percent $R_1$-containing units and 10 mole percent $R_2$-containing units.

11. A process according to Claim 9 or Claim 10, wherein $R_1$ is

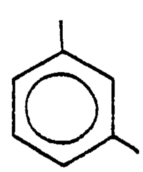

and $R_2$ is

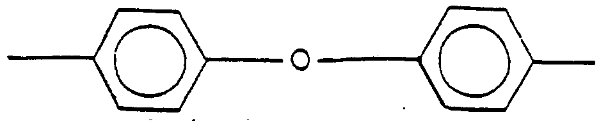

12. A process according to Claim 11, wherein Z is a trivalent benzene ring, and the proportion of $R_1$-containing units to $R_2$-containing units is in the range from 20 mole percent $R_1$-containing units and 80 mole percent $R_2$-containing units to 80 mole percent $R_1$-containing units and 20 mole percent $R_2$-containing units.

13. A process according to Claim 12, wherein the proportion of $R_1$-containing units to $R_2$-containing units is in the range from 40 mole percent $R_1$-containing units and 60 mole percent $R_2$-containing units to 60 mole percent $R_1$-containing units and 40 mole percent $R_2$-containing units.

14. A process according to any of Claims 9 to 13, wherein X is

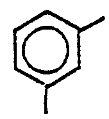

und $R_1$ ist

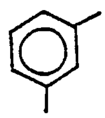

15. A process according to any one of Claims 1 to 14, wherein said molded object contains from 20 to 60 weight per cent of glass fibers, glass beads, mineral fillers or a mixture thereof.

**Patentansprüche**

1. Verfahren zur Herstellung eines geformten Gegenstands durch Spritzgießen, dadurch gekennzeichnet, daß ein willkürliches lineares spritzgießbares Amid-Imid-Copolymerisat einem Spritzgießverfahren unterzogen wird, das hergestellt worden ist durch Bildung eines Reaktionsgemisches aus (A) dem Acylierungsprodukt aus einer Umsetzung von einem Mol eines aromatischen Diamins oder eines Gemisches von aromatischen Diaminen mit ein oder zwei Mol einer aliphatischen $C_2$- bis $C_8$-Monocarbonsäure oder eines aliphatischen $C_4$- bis $C_{16}$-Monocarbonsäureanhydrids und (B) wenigstens einem aromatischen Tricarbonsäureanhydrid oder einem Gemisch von wenigstens einer aromatischen Dicarbonsäure und wenigstens einem aromatischen Tricarbonsäureanhydrid in einem Molverhältnis von 9:1 bis 1:9 und durch Polykondensation dieses Reaktionsgemisches bei einer Temperatur von 65 bis 399°C (150 bis 750°F), wobei das Molverhältnis von Diamin zum Anhydrid oder zur Säure und dem Anhydridgemisch von 0,9:1 bis 1,1:1 reicht und das dem Spritzgießverfahren zu unterziehende Copolymerisat eine inhärente Viskosität (gemessen bei 25°C an einer 0,5%-igen (Gewicht/Volumen) Lösung in N-Methylpyrrolidon) vn 0,6 bis 3,0 aufweist.

2. Verfahren nach Anspruch 1, dadurch gekennzeichnet, daß die aromatische Dicarbonsäure Isophthalsäure ist.

3. Verfahren nach Anspruch 1 oder 2, dadurch gekennzeichnet, daß das Tricarbonsäureanhydrid Trimellitsäureanhydrid ist.

4. Verfahren nach einem der vorhergehende Ansprüche, dadurch gekennzeichnet, daß 70 bis 100% der gesamten Aminfunktionen acyliert worden sind.

5. Verfahren nach einem der vorhergehenden Ansprüche, dadurch gekennzeichnet, daß die acylierten Diamine aus aromatischen Diaminen hergestellt werden, welche einen Benzolring oder zwei Benzolringe enthalten, die direkt oder durch stabile Brücken miteinander verbunden sind, welche aus den Gruppen —S—, —O—,

$$-\overset{\overset{\displaystyle O}{\|}}{S}-, \quad -SO_2-, \quad -\overset{\overset{\displaystyle O}{\|}}{C}-$$

oder Methylen bestehen.

6. Verfahren nach Anspruch 5, dadurch gekennzeichnet, daß die acylierten Diamine aus Oxybisanilin und m-Phenylendiamin hergestellt werden.

7. Verfahren nach Anspruch 6, dadurch gekennzeichnet, daß das Molverhältnis aus dem Oxybisanilin und dem m-Phenylendiamin im Bereich von 8:2 bis 2:8 liegt.

8. Verfahren nach einem der vorhergehenden Ansprüche, dadurch gekennzeichnet, daß das Copolymerisat durch ein kontinuierliches Verfahren hergestellt worden ist.

9. Verfahren nach Anspruch 1, dadurch gekennzeichnet, daß das spritzgießbare willkürliche lineare Polyamid-Imid-Copolymerist Einheiten der Formel

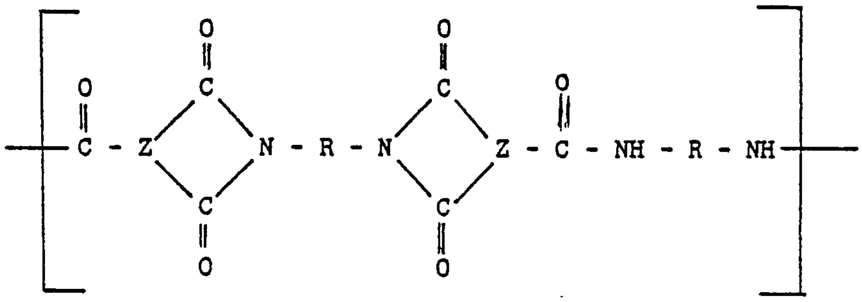

Eineheiten der Formel

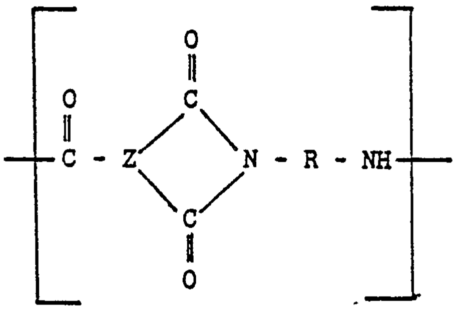

und gegebenenfalls Einheiten der Formel

$$-\!\!\left[CO - X - CO - NH - R - NH\right]\!\!-$$

enthält, worin Z ein dreiwertiger aromatischer Rest ist, die Gruppen R gleich oder unterschiedliche Gruppen $R_1$ und $R_2$ sind, welche zweiwertige aromatische Kohlenwasserstoffreste mit 6 bis 20 Kohlenstoffatomen oder zwei zweiwertige Kohlenwasserstoffreste mit 6 bis 20 Kohlenstoffatomen darstellen, die direkt oder durch stabile Brücken miteinander Verbunden sind, bie denen es sich im Reste von —O—, Methylen, —CO—, —$SO_2$— und/oder —S— handelt, und X ein zweiwertiger aromatischer Rest ist.

10. Verfahren nach Anspruch 9, dadurch gekennzeichnet, daß R ein Gemischen von $R_1$ und $R_2$ darstellt, in welchem das Verhältnis aus den Reste $R_1$ enthaltenden Einheiten und den Reste $R_2$ enthaltenden Einenheiten im Bereich von 10 Molprozent Reste $R_1$ enthaltenden Einheiten und 90 Molprozent Reste $R_2$ enthaltenden Eineheiten bis zu 90 Molprozent Reste $R_1$ enthaltenden Einheiten und 10 Mol prozent Reste $R_2$ enthaltenden Einheiten liegt.

11. Verfahren nach Anspruch 9 oder 10, dadurch gekennzeichnet, daß $R_1$ den Rest

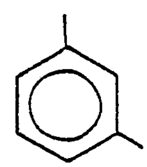

bedeutet und $R_2$ für den Rest

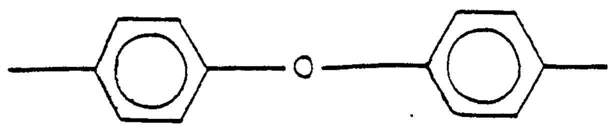

steht.

12. Verfahren nach Anspruch 11, dadurch gekennzeichnet, daß Z ein dreiwertiger Benzolring ist und das Verhältnis aus den $R_1$ enthaltenden Einheiten zu den $R_2$ enthaltenden Einheiten im Bereich von 20 Molprozent $R_1$ enthaltenden Einheiten und 80 Molprozent $R_2$ enthaltenden Einheiten bis zu 80 Molprozent $R_1$ enthaltenden Einheiten und 20 Molprozent $R_2$ enthaltenden Einheiten liegt.

13. Verfahren nach Anspruch 12, dadurch gekennzeichnet, daß das Verhältnis aus den $R_1$ enthaltenden Einheiten zu den $R_2$ enthaltenden Einheiten im Bereich von 40 Molprozent $R_1$ enthaltenden und 60 Molprozent $R_2$ enthaltenden Einheiten bis zu 60 Molprozent $R_1$ enthaltenden Einheiten und 40 Molprozent $R_2$ enthaltenden Einheiten liegt.

14. Verfahren nach einem der Ansprüche 9 bis 13, dadurch gekennzeichnet, daß X den Rest

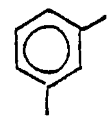

bedeutet und $R_1$ für den Rest

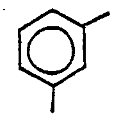

steht.

15. Verfahren nach einem der Ansprüche 1 bis 14, dadurch gekennzeichnet, daß der geformte Gegenstand 20 bis 60 Gewichtsprozent Glasfasern, Glasperlen, Mineralfasern oder ein Gemisch hiervon enthält.

**Revendications**

1. Procédé pour la préparation d'un objet moulé par moulage par injection, qui comprend le moulage par injection d'un copolymère amide-imide moulable par injection, linéaire, aléatoire produit en formant un mélange réactionnel de (A) le produit d'acylation produit par réaction d'un mole d'une diamine aromatique ou d'un mélange de diamines avec une à deux moles d'un acide monocarboxylique aliphatique en $C_2$ à $C_8$ ou d'une anhydride monocarbonxylique aliphatique en $C_4$ à $C_{16}$ et de (B).au moins un anhydride d'acide tricarboxylique aromatique, ou un mélange d'au moins un acide dicarboxylique aromatique et d'au moins un anhydride d'acide tricarboxylique aromatique dans un rapport molaire de 9:1 à 1:9 et la soumission dudit mélange réactionnel à des conditions de polycondensation à une température de 65 à 399°C (150 à 750°F), le rapport molaire de la diamine à l'anhydride ou au mélange d'acide et d'anhydride étant de 0,9:1 à 1,1:1, et le copolymère soumis au moulage par injection ayant une viscosité inhérente (mesurée à 25°C et à 0,5% en poids/volume dans la N-méthylpyrrolidone) de 0,6 à 3,0.

2. Procédé selon la revendication 1, dans lequel l'acide dicarboxylique aromatique est l'acide isophtalique.

3. Procédé selon la revendication 1 ou la revendication 2, dans lequel l'anhydride d'acide tricarboxylique est l'anhydride trimellitique.

4. Procédé selon l'une quelconque des revendications précédentes, dans lequel 70 à 100 pour cent de la fonctionalité amine totale ont été acylés.

5. Procédé selon l'une quelconque des revendications précédentes, dans lequel les diamines acylées sont préparées à partir de diamines aromatique contenant un cycle benzène ou deux cycles benzène joints directement ou par des liaisons stables constituées par des radicaux —S—, —O—,

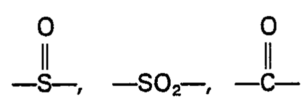

ou méthylène.

6. Procédé selon la revendication 5, dans lequel les diamines acylées sont préparées à partir d'oxybisaniline et de métaphénylènediamine.

7. Procédé selon la revendication 6, dans lequel le rapport molaire de l'oxybisaniline à la métaphénylènediamine est dans la gamme de 8:2 à 2:8.

8. Procédé selon l'une quelconque des revendications précédentes, dans lequel ledit copolymère a été produit dans un procédé en continu.

9. Procédé selon la revendication 1, dans lequel le copolymère polyamide-imide, linéaire, aléatoire, moulable par injection comprend des unités du type:

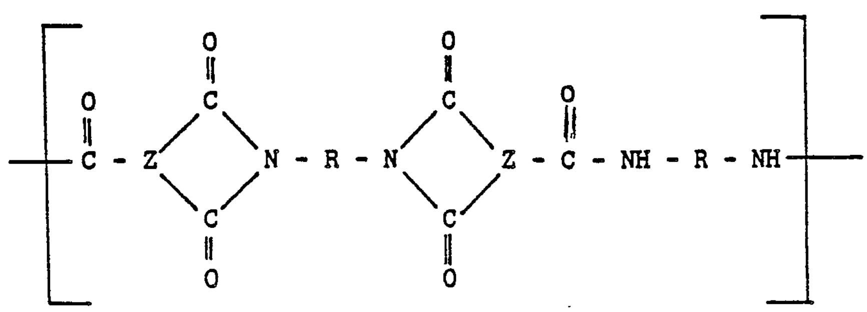

et des unités du type

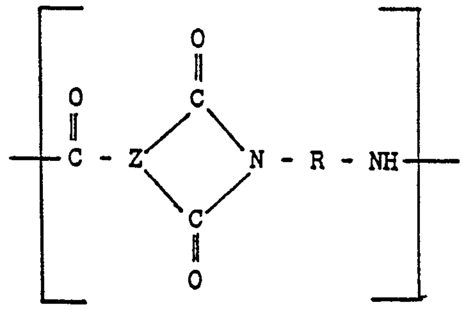

et éventuellement des unités du type

$$\left[ CO - X - CO - NH - R - NH \right]$$

où "Z" est un radical aromatique trivalent; les groupes R sont les groupes $R_1$ et $R_2$ identiques ou différents, qui sont des radicaux hydrocarbonés aromatiques bivalents ayant 6 à 20 atomes de carbone ou deux radicaux hydrocarbonés bivalents ayant 6 à 20 atomes de carbone, joints directement ou par des liaisons stables choisies dans le groupe constitué par les radicaux —O—, méthylène, —CO—, —$SO_2$— et —S— et X est un radical aromatique bivalent.

10. Procédé selon la revendication 9, dans lequel lorsque R comprend un mélange de $R_1$ et de $R_2$, la proportion d'unités contenant $R_1$ aux unités contenant $R_2$ est dans la gamme de 10 moles pour cent d'unités contenant $R_1$ et de 90 moles pour cent d'unités contenant $R_2$ à 90 moles pour cent d'unités contenant $R_1$ et 10 moles pour cent d'unités contenant $R_2$.

11. Procédé selon la revendication 9 ou la revendication 10, dans lequel $R_1$ est

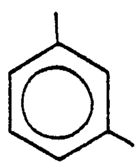

et $R_2$ est

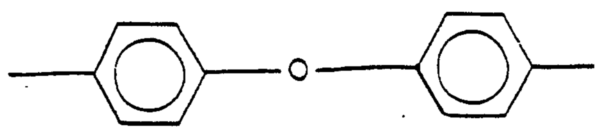

12. Procédé selon la revendication 11, dans lequel Z est un cycle benzène trivalent, et la proportion d'unités contenant $R_1$ aux unités contenant $R_2$ est dans la gamme de 20 moles pour cent d'unités contenant $R_1$ et 80 moles pour cent d'unités contenant $R_2$ à 80 moles pour cent d'unités contenant $R_1$ et 20 moles pour cent d'unités contenant $R_2$.

13. Procédé selon la revendication 12, dans lequel la proportion d'unités contenant $R_1$ aux unités contenant $R_2$ est dans la gamme de 40 moles pour cent d'unités contenant $R_1$ et 60 moles pour cent d'unités contenant $R_2$ à 60 moles pour cent d'unités contenant $R_1$ et 40 moles pour cent d'unités contenant $R_2$.

14. Procédé selon l'une quelconque des revendications 9 à 13, dand lequel X est

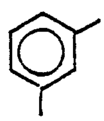

et $R_1$ est

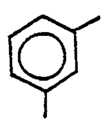

15. Procédé selon l'une quelconque des revendications 1 à 14, dans lequel ledit objet moulé contient de 20 à 60 pour cent en poids de fibres de verre, de billes de verre, d'agents de remplissage minéraux ou d'un mélange de ceux-ci.